# EUROPÄISCHE PATENTSCHRIFT

(11) **EP 1 080 312 B1**
(45) Veröffentlichungstag und Bekanntmachung des Hinweises auf die Patenterteilung: **09.07.2003**
(21) Anmeldenummer: 00915139.0
(22) Anmeldetag: 07.03.2000
(51) Int. Cl.: F16C 11/06

(54) **KUGELGELENK**
BALL JOINT
JOINT A ROTULE

(30) Priorität: 17.03.1999 DE 19911770
(43) Veröffentlichungstag der Anmeldung: 07.03.2001
(73) Patentinhaber: ZF Lemförder Metallwaren AG, 49441 Lemförde (DE)
(72) Erfinder: ABELS, Olaf, D-49191 Belm (DE); BRÖKER, Klaus, D-49163 Bohmte-Hunteburg (DE)
(86) Internationale Anmeldenummer: DE0000669
(87) Internationale Veröffentlichungsnummer: WO00055514

(56) Entgegenhaltungen:
- EP-A- 0 280 018
- EP-A- 0 611 893
- DE-B- 1 266 074
- DE-C- 3 632 265
- GB-A- 1 477 649
- SU-A- 465 971
- US-A- 4 220 418
- US-A- 4 650 362

## Beschreibung

Die Erfindung betrifft ein Kugelgelenk nach dem Oberbegriff des Patentanspruches 1.

Derartige Kugelgelenke werden beispielsweise für Radaufhängungen von Kraftfahrzeugen verwendet. Der prinzipielle Aufbau ist dabei fast immer gleich. So bestehen bekannte Kugelgelenke aus einem Gehäuse und einer darin eingesetzten Lagerschale. Die Lagerschale nimmt mit ihrer inneren, sphärischen Lagerfläche die Gelenkkugel eines Kugelzapfens allseitig beweglich auf. Um die relativ zueinander beweglichen Kugelgelenkbauteile gegenüber der Umgebung abzudichten, wird ein Dichtungsbalg zwischen dem Gehäuse und dem Kugelzapfen eingesetzt.

Ein solches Kugelgelenk geht beispielsweise aus der DE 36 32 265 C1 hervor. Der zwischen dem Gehäuse und dem Kugelzapfen angeordnete Dichtungsbalg ist mit seinem zapfenseitigen Randbereich nur teilweise in einem im Querschnitt gesehen L-förmigen Haltering an dem Kugelzapfen festgelegt. Nachteilig bei einer Ausführung nach der DE 36 32 265 C1 ist jedoch, daß der festgesetzte Dichtungsbalg mit seiner äußeren Oberfläche unmittelbar an dem Kraftfahrzeugbauteil anliegt und somit bei Bewegungen des Kugelgelenkes infolge der Relativbewegung zwischen Dichtungsbalg und Kraftfahrzeugbauteil Reibung entsteht, die die Oberfläche des Dichtungsbalges beschädigt und über einen längeren Lebensdauerzyklus hinweg den Balg in seiner Dichtungsfunktion beeinträchtigt beziehungsweise ihn insgesamt zerstört. Dies birgt das Risiko in sich, daß der Dichtungsbalg vorzeitig altert, verschleißt und möglicherweise somit das Gelenk insgesamt ausfällt.
Aus der SUI-PS 465 971 ist darüber hinaus ein Haltering bekannt, der festsitzend auf dem Kugelzapfen angeordnet ist und den Dichtungsbalgrand gleitend aufnimmt.

Ein dem Oberbegriff des Anspruchs 1 entsprechendes Kugelgelenk ist aus dem Dokument US 4 220 418 A bekannt.

Der vorliegenden Erfindung liegt die technische Problemstellung zugrunde, die Bauteilpaarung "Kugelzapfen - Dichtungsbalg" in einer Weise auszuführen, die bei kostengünstiger Herstellung einen Ausgleich der im Gelenk entstehenden Bewegungen möglichst reibungsarm ermöglicht ohne das der Dichtungsbalg hierbei verschlissen oder zerstört wird.

Die Erfindung löst diese technische Problemstellung mit den kennzeichnenden Merkmalen des Patentanspruches 1.
Weitere Ausgestaltungen der Erfindung sind Gegenstand der Unteransprüche.

Die vorliegende Erfindung weist demnach einen auf dem Kugelzapfen festgesetzten Laufring auf. In diesen Laufring ist ein den zapfenseitigen Randbereich des Dichtungsbalges aufnehmender Gleitring gleitend eingesetzt, wobei der Gleitring mit seiner der Gelenkkugel zugewandten Gleitfläche an dem laufring anliegt und eine lösbare Verbindung mit dem Randbereich des Dichtungsbalgs eingeht. Durch die erfindungsgemäße Lösung wird eine reibungsoptimierte Paarung zwischen Laufring und Gleitring geschaffen. Die den Dichtungsbalgrandbereich aufnimmt und somit ohne eine Zerstörung oder Beschädigung des Dichtungsbalges den Ausgleich sämtlicher von diesem vollzogenen Bewegungen im Kugelgelenk ermöglicht.

Eine weitere vorteilhafte Ausgestaltung eines erfindungsgemäßen Kugelgelenkes sieht vor, die mit dem Randbereich des Dichtungsbalges zusammenwirkende Innenseite des Gleitringes zumindest Bereichsweise mit einem Ringbund auszustatten. Dieser Ringbund ist vorzugsweise an der Innenseite des Gleitringes angeformt, so das dieser als einstückiges Bauteil hergestellt werden kann. Der Ringbund greift seinerseits in eine komplementäre Kontur im Randbereich des Dichtungsbalges ein. Dadurch wird in einfacher und vorteilhafter Weise eine "Klemmwirkung" erreicht. Diese drückt den Dichtungsbalgrandbereich unter Vorspannung gegen den Laufring, so das neben der Gleitfunktion des Dichtungsbalgrandbereiches gleichzeitig eine hinreichende Abdichtung gewährleistet ist. Der Gleitring kann dabei im Querschnitt gesehen annähernd eine L-, T- oder F- Form aufweisen.

Um die Gleitreibung zwischen Gleitring und Laufring weiter zu reduzieren wird erfindungsgemäß darüber hinaus vorgeschlagen, bei Verwendung eines im Querschnitt gesehen annähernd L-förmigem Gleitringes der dementsprechend aus einem Axialschenkel und einem Radialschenkel besteht, eine Gleitverbindung lediglich zwischen Radialschenkel und der Innenoberfläche des Laufringes herzustellen. Zwischen dem Axialschenkel und der dem Axialschenkel zugeordneten Innenoberfläche des Laufringes befindet sich ein Spalt. Durch eine derartige Lösung stehen sehr kleine Oberflächen mit einander in Kontakt, was eine gezielte Beeinflussung der Reibungsparameter ermöglicht. Der Laufring kann seinerseits im Querschnitt gesehen eine U- oder ebenfalls eine L-Form aufweisen. In Abhängigkeit von den Anforderungen an die Gleitreibungspartner und die Abdichtung des Gesamtsystemes ist es darüber hinaus möglich, daß wenigstens eine Oberfläche des Randbereiches des Dichtungsbalges unmittelbar gleitend an der Innenfläche des Laufringes anliegt. Entsprechend der hier vorgestellten Lösung kann diese Kontaktpaarung aus einer Dichtlippe des Dichtungsbalgrandbereiches bestehen oder eine mit der Innenfläche des Laufringes erzeugte Labyrintdichtung sein.

Die Labyrintdichtung zwischen Innenoberfläche des Laufringes und dem Randbereiches des Dichtungsbalges sowie die Dichtlippe sind alternative Lösungen, die selbstverständlich auch zusammen zum Einsatz kommen können. Dies bedeutet, daß beispielsweise eine Oberfläche des Dichtungsbalgrandbereiches eine Dichtlippe aufweist, wobei diese Dichtlippe gegen die Innenfläche des Laufringes wirkt und eine andere, zweite Oberfläche des Randbereiches des Dichtungsbalges zusammen mit der Innenfläche des Laufringes eine Labyrintdichtung erzeugt. Der Gleitring übernimmt dabei die Funktion, den Randbereich des Dichtungsbalges in der entsprechenden axialen oder radialen Richtung gegen die abzudichtende Oberfläche vorzuspannen. Unterstützend kann dabei ein reduzierter Dichtungsbalgdurchmesser wirken. Der Gleitring kann als Blechformteil oder Kunststoffformteil einfach und kostengünstig hergestellt werden. Gleiches trifft für den Laufring zu.

Erfindungsgemäß kann der Gleitring gemäß einer weiteren Ausgestaltung wenigstens einen Schlitz aufweisen. Bei einer geschlitzten Ausführung des Gleitringes wird dieser während der Montage kurzzeitig aufgeweitet und anschließend in den Laufring eingeschnappt.

Eine andere erfindungsgemäße Ausführung besteht darin, daß der Laufring beabstandet zueinander angeordnete Laschen aufweist. Der Gleitring wird bei einer derartigen Ausführungsform auf den Laufring aufgeschoben, wobei anschließend die Laschen des Laufringes in radialer Richtung umgeformt werden und somit den Gleitring zusammen mit den Randbereich des Dichtungsbalges innerhalb des Laufringes aufnehmen.

Durch ein erfindungsgemäßes Kugelgelenk kann in sinnfälliger Weise eine Abdichtung der Bauteilpaarung "Kugelzapfen - Dichtungsbalg" in axialer, in radialer sowie in axialer und radialer Richtung realisiert werden. Aus Stabilitätsgründen ist es dabei von Vorteil, wenn der zapfenseitige Randbereich des Dichtungsbalges eine verstärkte Materialwulst bildet, die mit einer elastischen Vorspannung gegen den Laufring und/oder gegen den Gleitring wirkt. Erreicht wurde durch ein erfindungsgemäßes Kugelgelenk eine reduzierte Reibung zwischen dem Dichtungsbalg und dem Kugelzapfen. Der Dichtungsbalg kann sich bei Gelenkbewegungen nicht mehr verwinden und wird somit infolge der durch die Verwindung entstehenden schädlichen Zugspannungen auch nicht verschlissen und zerstört, wie es bei bekannten Ausführungen im Stand der Technik der Fall ist. Die Bemessung der Vorspannung zwischen Gleitring und Laufring ist sehr einfach und genau möglich, so das die Reibungsparameter und damit das Verhalten der Reibpartner exakt vorherbestimmbar wird.

Der Gleitring ist erfindungsgemäß lösbar mit dem Randbereich des Dichtungbalges verbunden.

Ein erfindungsgemäßes Kugelgelenk wird nachstehend unter Bezugnahme auf die zugehörigen Zeichnungen näher erläutert.

Es zeigen:
- Figuren 1, 2, 5 - 7:: verschiedene erfindungsgemäße Ausführungen der Bauteilpaarung Kugelzapfen - Dichtungsbalgrandbereich,
- Figur 3:: ausschnittweise den Schnittverlauf III - III gemäß Figur 1,
- Figur 4:: ausschnittweise den Schnittverlauf IV - IV gemäß Figur 2 und
- Figur 8:: den Schnittverlauf VIII - VIII gemäß der Darstellung in Figur 7.

In den ausschnittsweisen Figurendarstellungen sind der Einfachheit halber die Gehäuse und Lagerschalen der Kugelgelenke nicht dargestellt. Auf den Kugelzapfen 3 ist ein im Querschnitt gesehen U-förmiger Laufring 5 aufgesetzt. Der Festsitz des Laufringes 5 auf dem Kugelzapfen 3 wird vorzugsweise durch eine Presspassung erreicht. In den im Querschnitt gesehen U-förmigen Laufring 5 ist ein im Querschnitt gesehen L-förmiger Gleitring 6 eingesetzt. Der Gleitring 6 weist einen Axialschenkel 6.3 und einen Radialschenkel 6.4 auf. Zwischen diesen Schenkeln ist der Randbereich 4.1 des Dichtungsbalges 4 aufgenommen. Eine Oberfläche des Randbereiches 4.1 des Dichtungsbalges 4 steht dabei in unmittelbarem Gleitkontakt mit der Innenoberfläche des Laufringes 5. Diese Verbindung stellt gleichzeitig eine Labyrintdichtung 4.3, 5.1 dar. An der Auflageseite des Radialschenkels 6.4 des Gleitringes 6 weist der Laufring 5 Laschen 5.2 auf. Diese vor der Montage des Gleitringes in axialer Richtung ausgerichteten Laschen werden nach dem Einsetzen des Gleitringes 6 in den Laufring 5 umgeformt, sodaß eine Gleitpaarung zwischen Laufring 5 und Gleitring 6 entsteht.

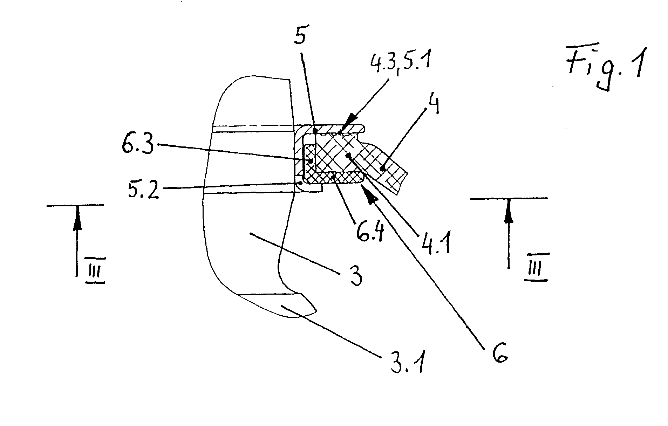

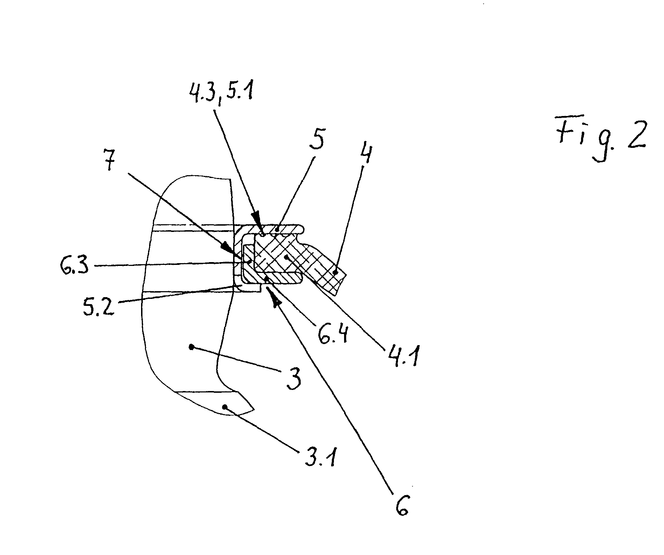

In der Figur 2 ist noch einmal eine im wesentlichen zu der in Figur 1 gezeigten Ausführung baugleiche Bauteilpaarung zwischen Kugelzapfen 3 und Dichtungsbalgrandbereich 4.1 dargestellt. Bei der erfindungsgemäßen Ausführung gemäß Figur 2 ist jedoch der Gleitring 6 mit seinem Axialschenkel 6.3 nicht im gleitkontakt zu der Innenoberfläche des Laufringes 5. Vielmehr befindet sich zwischen dem Axialschenkel 6.3 des Gleitringes 6 und der Innenoberfläche des Laufringes 5 ein Spalt 7. Der Gleitring 6 liegt mithin nur bereichsweise mit seinem Radialschenkel 6.4 auf den Laschen 5.2 des Laufringes 5 auf. Die miteinander in Kontakt stehenden Oberflächen zwischen Laufring 5 und Gleitring 6 sind bei einer derartigen Ausführung sehr klein, so das hierdurch eine erhebliche Reduzierung der Reibung erreicht werden kann.

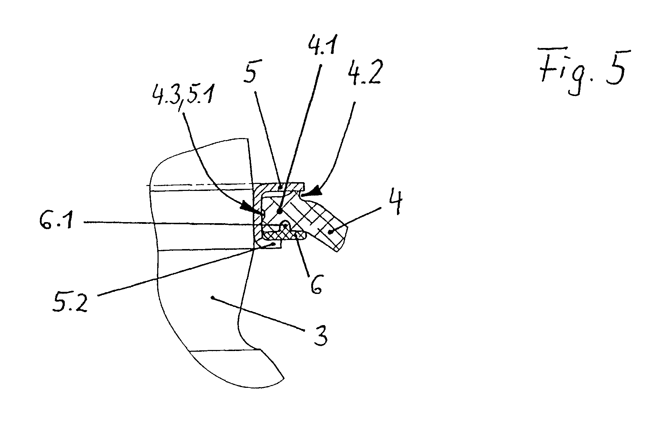

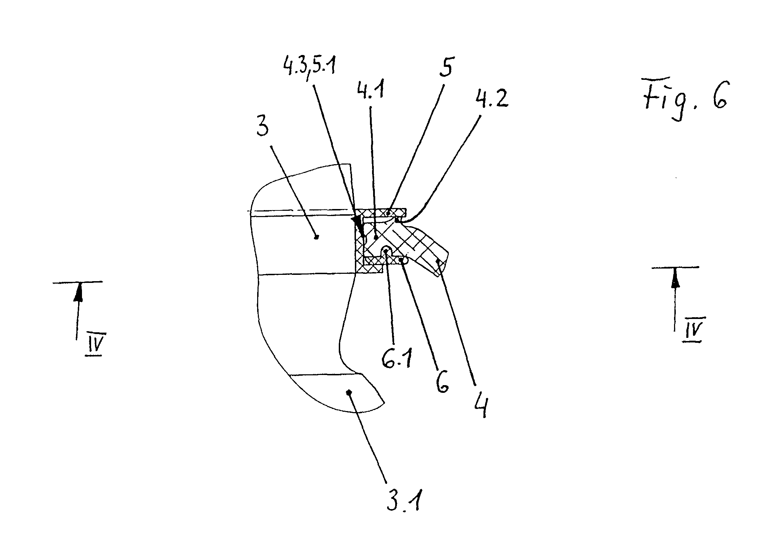

Die zeichnerisch in den Figuren 5 und 6 dargestellten Ausführungsformen eines erfindungsgemäßen Kugelgelenkes weisen einige Besonderheiten auf. So ist der Laufring 5 wiederum im Querschnitt gesehen U-förmig, jedoch wird der Gleitring 6 scheibenförmig ausgeführt. Etwa mittig ist an der dem Randbereich 4.1 des Dichtungsbalges 4 zugewandten Seite an dem Gleitring 6 ein Ringbund 6.1 angeformt. Dieser Ringbund greift unmittelbar in den Randbereich 4.1 des Dichtungsbalges 4 ein und ermöglicht somit den Randbereich unter einer Vorspannung gegen die Innenoberfläche des Laufringes zu drücken. Ferner weist der Randbereich 4.1 des Dichtungsbalges 4 eine Dichtlippe 4.2, die an einer ersten Innenoberfläche des Laufringes 5 anliegt und infolge ihrer Abstreifwirkung bei Bewegungen des Dichtungsbalges eine Dichtungsfunktion erfüllt, auf. An einer anderen Oberfläche des Randbereiches 4.1 des Dichtungsbalges 4 ist darüber hinaus eine wellenförmige Kontur 4.3 angeformt. Diese wirkt mit einer komplementär gestalteten Innenoberfläche 5.1 des Laufringes 5 zusammen und bildet eine Labyrintdichtung (4.3, 5.1).

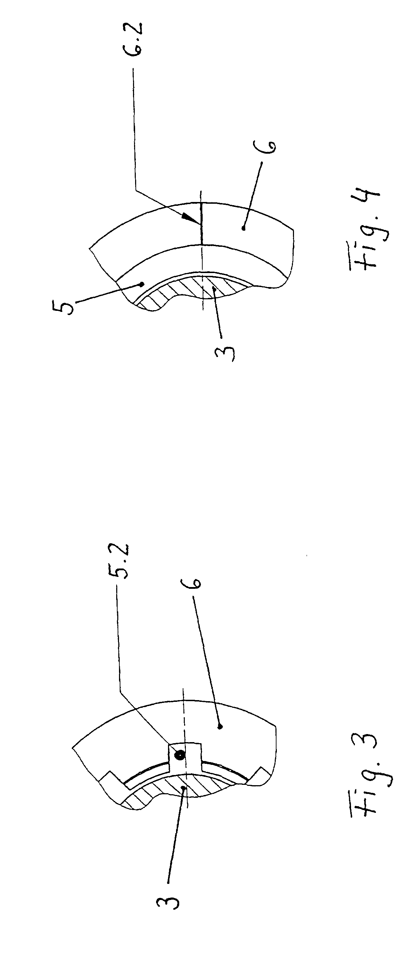

Bei der Ausführung entsprechend der Figur 6 ist der Gleitring 6 zudem geschlitzt ausgeführt. Das bedeutet, er wird während der Montage auf den Laufring 5 aufgeschnappt. Aus dem in Figur 4 gezeigten Schnittverlauf IV-IV aus Figur 2 wird dies ersichtlich. In der Figur 3 ist der Schnittverlauf III - III entsprechend Figur 1 gezeigt. Dabei sind die Laschen 5.2 erkennbar.

Wie aus den Figuren 1,2,5 und 6 erkennbar ist, können sowohl der Laufring 5 als auch der Gleitring 6 wahlweise aus Metall oder Kunststoff oder aus Metall- Kunststoff-Verbundwerkstoffen hergestellt werden.

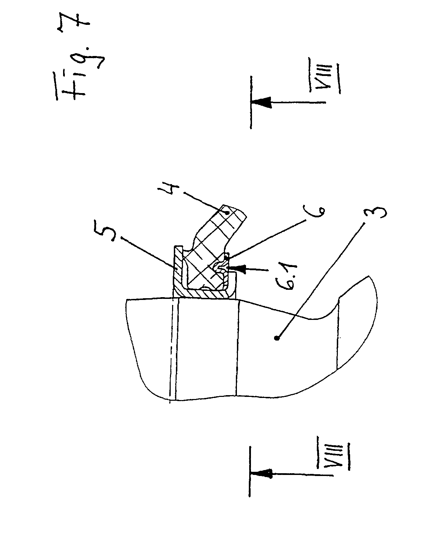

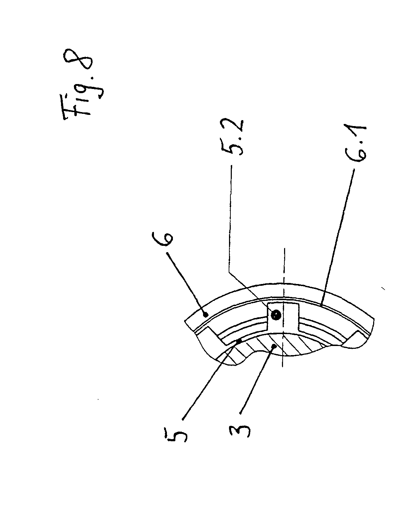

Die grundsätzlich zu den in den Figuren 5 und 6 dargestellten Ausführungen baugleiche Variante eines erfindungsgemäßen Kugelgelenkes, wie sie in Figur 7 gezeigt ist, weist den Unterschied auf, daß der Gleitring 6 aus einem durch Umformung und Prägung hergestellten Blechteil besteht. Die Verbindung dieses Gleitringes 6 mit dem Laufring 5 ist in der Schnittdarstellung in Figur 8 entsprechend dem Schnittverlauf VIII - VIII aus Figur 7 gezeigt. Dabei dienen wiederum in der schon zuvor beschriebenen Art und Weise Laschen 5.2 des Laufringes 5 zur Fixierung des Randbereiches 4.1 des Dichtungsbalges 4 sowie des Gleitringes 6. Der Ringbund 6.1 wird durch einen Materialfalz gebildet.

### Bezugszeichenliste:

- 1: Gehäuse
- 2: Lagerschale
- 3: Kugelzapfen
- 3.1: Gelenkkugel
- 4: Dichtungsbalg
- 4.1: Randbereich
- 4.2: Dichtlippe
- 4.3: Labyrinthdichtung
- 5: Laufring
- 5.1: Labyrinthdichtung
- 5.2: Lasche
- 6: Gleitring
- 6.1: Ringbund
- 6.2: Schlitz
- 6.3: Axialschenkel
- 6.4: Radialschenkel
- 7: . Spalt

## Patentansprüche

1. Kugelgelenk bestehend aus:
- einem Gehäuse (1),
- einer darin eingesetzten Lagerschale (2),
- einem Kugelzapfen (3), dessen Gelenkkugel (3.1) in der Lagerschale allseitig beweglich gelagert ist sowie
- einem Dichtungsbalg (4) zwischen dem Gehäuse und dem Kugelzapfen,
wobei in einen auf dem Kugelzapfen (3) festgesetzten Laufring (5) ein den zapfenseitigen Randbereich (4.1) des Dichtungsbalges (4) aufnehmender Gleitring (6) gleitend eingesetzt ist, **dadurch gekennzeichnet, dass**
der Gleitring (6) mit seiner der Gelenkkugel (3.1) zugewandten Gleitfläche an dem Laufring (5) anliegt und eine lösbare Verbindung mit dem Randbereich (4.1) des Dichtungsbalgs (4) eingeht.

2. Kugelgelenk nach Anspruch 1,
**dadurch gekennzeichnet, daß**
auf der mit dem Randbereich (4.1) des Dichtungsbalges (4) zusammenwirkenden Innenseite des Gleitringes (6) zumindest bereichsweise wenigstens ein Ringbund (6.1) angeformt ist, der in den Randbereich (4.1) des Dichtungsbalges (4) eingreift.

3. Kugelgelenk nach Anspruch 1 oder 2,
**dadurch gekennzeichnet, daß**
der Gleitring (6) im Querschnitt gesehen annähernd eine L-, T- oder F-Form aufweist.

4. Kugelgelenk nach Anspruch 1 oder 2,
**dadurch gekennzeichnet, daß**
der Gleitring (6) im Querschnitt gesehen annähernd eine L-Form aufweist, dementsprechend aus einem Axialschenkel (6.3) und einem Radialschenkel (6.4) besteht, wobei der Radialschenkel (6.4) mit der Innenoberfläche des Laufringes (5) in Gleitkontakt steht und zwischen dem Axialschenkel (6.3) und der zugeordneten Innenoberfläche des Laufringes (5) ein Spalt (7) vorhanden ist.

5. Kugelgelenk nach einem der vorhergehenden Ansprüche,
**dadurch gekennzeichnet, daß**
der Laufring (5) im Querschnitt gesehen annähernd eine U-Form aufweist.

6. Kugelgelenk nach einem der vorhergehenden Ansprüche,
**dadurch gekennzeichnet, daß**
wenigstens eine Oberfläche des Randbereiches (4.1) des Dichtungsbalges (4) gleitend an der Innenfläche des Laufringes (5) anliegt.

7. Kugelgelenk nach Anspruch 6,
**dadurch gekennzeichnet, daß**
die an der Innenfläche des Laufringes anliegende Oberfläche des Randbereiches (4.1) des Dichtungsbalges (4) eine Dichtlippe (4.2) aufweist oder zusammen mit der Innenfläche eine Labyrinthdichtung (4.3, 5.1) bildet.

8. Kugelgelenk nach Anspruch 6,
**dadurch gekennzeichnet, daß**
eine an der Innenfläche des Laufringes anliegende Oberfläche des Randbereiches (4.1) des Dichtungsbalges (4) eine Dichtlippe (4.2) aufweist und eine zweite Oberfläche des Randbereiches (4.1) des Dichtungsbalges (4) zusammen mit der Innenfläche eine Labyrinthdichtung (4.3, 5.1) bildet.

9. Kugelgelenk nach einem der vorangehenden Ansprüche,
**dadurch gekennzeichnet, daß**
der Gleitring (6) ein Blechformteil oder ein Kunststoff-Formteil ist.

10. Kugelgelenk nach einem der vorangehenden Ansprüche,
**dadurch gekennzeichnet, daß**
der mit dem Gleitring (6) in Kontakt stehende Schenkel des Laufringes (5) aus beabstandet zueinander angeordneten Laschen (5.2) besteht.

11. Kugelgelenk nach einem der vorangehenden Ansprüche,
**dadurch gekennzeichnet, daß**
der Gleitring (6) wenigstens einen radial verlaufenden Schlitz (6.2) aufweist.

12. Kugelgelenk nach einem der vorangehenden Ansprüche,
**dadurch gekennzeichnet, daß**
der zapfenseitige Randbereich (5.1) des Dichtungsbalges (5) eine verstärkte Materialwulst bildet, die mit einer elastischen Vorspannung gegen den Laufring (5) oder den Gleitring (6) drückt.

## Claims

1. Ball joint consisting of:
- a housing (1),
- a bearing shell (2) inserted therein,
- a ball pin (3) whose joint ball (3.1) is mounted in the bearing shell in a universally movable manner, and also
- a sealing bellows (4) between the housing and the ball pin,
wherein a sliding ring (6), which receives that rim region (4.1) of the sealing bellows (4) which is on the pin side, is inserted in a sliding manner in a thrust ring (5) fixed on the ball pin (3), **characterised in that**
the sliding ring (6) rests, with its sliding face that faces towards the joint ball (3.1), against the thrust ring (5) and forms a detachable connection with the rim region (4.1) of the sealing bellows (4).

2. Ball joint according to claim 1,
**characterised in that**
there is formed, at least in certain regions, onto that inner side of the sliding ring (6) which interacts with the rim region (4.1) of the sealing bellows (4) at least one annular collar (6.1) which engages in the said rim region (4.1) of the sealing bellows (4).

3. Ball joint according to claim 1 or 2,
**characterised in that,**
viewed in cross-section, the sliding ring (6) has approximately the shape of an L, T or F.

4. Ball joint according to claim 1 or 2,
**characterised in that,**
viewed in cross-section, the sliding ring (6) has approximately the shape of an L and accordingly consists of an axial leg (6.3) and a radial leg (6.4), the radial leg (6.4) being in sliding contact with the inner surface of the thrust ring (5) and there being a gap (7) between the axial leg (6.3) and the associated inner surface of the thrust ring (5).

5. Ball joint according to one of the preceding claims,
**characterised in that**,
viewed in cross-section, the thrust ring (5) has approximately the shape of a U.

6. Ball joint according to one of the preceding claims,
**characterised in that**
at least one surface of the rim region (4.1) of the sealing bellows (4) rests in a sliding manner against the inner face of the thrust ring (5).

7. Ball joint according to claim 6,
**characterised in that**
that surface of the rim region (4.1) of the sealing bellows (4) which lies against the inner face of the thrust ring has a sealing lip (4.2) or forms a labyrinth seal (4.3, 5.1) in conjunction with the said inner face.

8. Ball joint according to claim 6,
**characterised in that**
a surface of the rim region (4.1) of the sealing bellows (4) that rests against the inner face of the thrust ring has a sealing lip (4.2) and a second surface of the said rim region (4.1) of the sealing bellows (4) forms a labyrinth seal (4.3, 5.1) in conjunction with the said inner face.

9. Ball joint according to one of the preceding claims,
**characterised in that**
the sliding ring (6) is a shaped sheet-metal part or a shaped plastic part.

10. Ball joint according to one of the preceding claims,
**characterised in that**
that leg of the thrust ring (5) which is in contact with the sliding ring (6) consists of tabs (5.2) which are disposed so as to be spaced apart from one another.

11. Ball joint according to one of the preceding claims,
**characterised in that**
the sliding ring (6) has at least one radially extending slit (6.2).

12. Ball joint according to one of the preceding claims,
**characterised in that**
that rim region (5.1) of the sealing bellows (5) which is on the pin side forms a reinforced bead of material which presses, with elastic pretensioning, against the thrust ring (5) or the sliding ring (6).

## Revendications

1. Joint à rotule constitué de :
- un boîtier (1),
- une coquille de coussinet (2) placée à l'intérieur de celui-ci,
- un pivot à rotule (3) dont la rotule (3.1) est montée déplaçable de tous côtés dans la coquille de coussinet, ainsi que
- d'un soufflet d'étanchéité (4) entre le boîtier et le pivot à rotule,
une bague de glissement (6), recevant la zone des bords (4.1) côté pivot du soufflet d'étanchéité (4), étant insérée à glissement dans une bague de roulement (5) fixée sur le pivot à rotule (3), **caractérisé en ce que**
la bague de glissement (6) s'applique, par sa surface de glissement tournée vers la rotule (3.1), contre la bague de roulement (5), et réalise une liaison séparable avec la zone des bords (4.1) du soufflet d'étanchéité (4).

2. joint à rotule selon la revendication 1,
**caractérisé en ce que**
sur le côté intérieur de la bague de glissement (6), coopérant avec la zone des bords (4.1) du soufflet d'étanchéité (4), il est formé d'un seul tenant, au moins par endroits, au moins un épaulement annulaire (6.1) qui s'engage dans la zone des bords (4.1) du soufflet d'étanchéité (4).

3. Joint à rotule selon la revendication 1 ou 2,
**caractérisé en ce que**
la bague de glissement (6), vue en coupe transversale, présente approximativement la forme d'un L, d'un T ou d'un F.

4. Joint à rotule selon la revendication 1 ou 2,
**caractérisé en ce que**
la bague de glissement (6), vue en coupe transversale, présente approximativement la forme d'un L, et est constituée en conséquence d'une branche axiale (6.3) et d'une branche radiale (6.4), la branche radiale (6.4) étant en contact glissant avec la surface intérieure de la bague de roulement (5), et une fente (7) existant entre la branche axiale (6.3) et la surface intérieure associée de la bague de roulement (5).

5. Joint à rotule selon l'une des revendications précédentes,
**caractérisé en ce que**
la bague de roulement (5), vue en coupe transversale, présente approximativement la forme d'un U.

6. Joint à rotule selon l'une des revendications précédentes,
**caractérisé en ce que**
au moins une surface de la zone de bordure (4.1) du soufflet d'étanchéité (4) s'applique à glissement contre la surface intérieure de la bague de roulement (5).

7. Joint à rotule selon la revendication 6,
**caractérisé en ce que**
la surface, s'appliquant contre la surface intérieure de la bague de roulement, de la zone des bords (4.1) du soufflet d'étanchéité (4), présente une lèvre d'étanchéité (4.2) ou forme une étanchéité à labyrinthe (4.3, 5.1) avec la surface intérieure.

8. Joint à rotule selon la revendication 6,
**caractérisé en ce que**
une surface, s'appliquant contre la surface intérieure de la bague de glissement, de la zone des bords (4.1) du soufflet d'étanchéité (4), présente une lèvre d'étanchéité (4.2) et une deuxième surface de la zone des bords (4.1) du soufflet d'étanchéité (4) forme une étanchéité à labyrinthe (4.3, 5.1) avec la surface intérieure.

9. Joint à rotule selon l'une des revendications précédentes,
**caractérisé en ce que**
la bague de glissement (6) est une pièce façonnée en tôle ou une pièce façonnée en matière plastique.

10. Joint à rotule selon l'une des revendications précédentes,
**caractérisé en ce que**
la branche de la bague de roulement (5), en contact avec la bague de glissement (6), est constituée de pattes (5.2) disposées à distance les unes des autres.

11. Joint à rotule selon l'une des revendications précédentes,
**caractérisé en ce que**
la bague de glissement (6) présente au moins une fente (6.2) s'étendant radialement.

12. Joint à rotule selon l'une des revendications précédentes,
**caractérisé en ce que**
la zone des bords (5.1) côté pivot du soufflet d'étanchéité (5) forme un bourrelet renforcé de matière qui presse par une précontrainte élastique contre la bague de roulement (5) ou la bague de glissement (6).
